(19) Europäisches Patentamt
European Patent Office
Office européen des brevets

(11) **EP 4 425 600 A1**

(12) **EUROPEAN PATENT APPLICATION**

(43) Date of publication:
**04.09.2024 Bulletin 2024/36**

(21) Application number: **23169458.9**

(22) Date of filing: **24.04.2023**

(51) International Patent Classification (IPC):
**H01M 4/131** (2010.01)  **H01M 4/525** (2010.01)
**H01M 4/587** (2010.01)  **H01M 10/0525** (2010.01)

(52) Cooperative Patent Classification (CPC):
**H01M 4/131; H01M 4/525; H01M 4/587;
H01M 10/0525;** H01M 2004/028; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.03.2023 CN 202310191906**

(71) Applicant: **CALB Group Co., Ltd.
Changzhou City, Jiangsu Province (CN)**

(72) Inventors:
• **ZHAO, Huifang
Changzhou City, Jiangsu Province (CN)**

• **WANG, Mingming
Changzhou City, Jiangsu Province (CN)**
• **SHEN, Taotao
Changzhou City, Jiangsu Province (CN)**
• **ZHANG, Xiaoyang
Changzhou City, Jiangsu Province (CN)**
• **WANG, Yang
Changzhou City, Jiangsu Province (CN)**
• **QIAO, Zhi
Changzhou City, Jiangsu Province (CN)**

(74) Representative: **Becker, Eberhard
Becker Kurig & Partner
Patentanwälte mbB
Bavariastraße 7
80336 München (DE)**

(54) **LITHIUM-ION BATTERY**

(57) Disclosed is a lithium-ion battery, which includes: a positive electrode sheet including a positive electrode current collector and a positive electrode active material layer arranged on opposite surfaces of the positive electrode current collector, the positive electrode active material layer includes a positive electrode active material $LiNi_xCo_yMn_{(1-x-y)}O_2$, wherein $0.7 \leq x < 1, 0 < y \leq 0.3$, $0 < x+y < 1$; a negative electrode sheet including a negative electrode current collector and a negative electrode active material layer arranged on opposite surfaces of the negative electrode current collector; a micro-stress $\sigma_{positive}$ of the positive electrode active material layer and the micro-stress $\sigma_{negative}$ of the negative electrode active material layer satisfy $0.115\ \text{Pa} \leq (\sigma_{positive} + \sigma_{negative}) / (\sigma_{positive} / \sigma_{negative}) \leq 0.165\ \text{Pa}$.

EP 4 425 600 A1

**Description**

BACKGROUND

Technical Field

The disclosure belongs to the technical field of batteries, and in particular relates to a lithium-ion battery.

Description of Related Art

Lithium-ion batteries have been commonly adopted in various portable equipment, aerospace, urban rail transit and other fields because of they have high energy density, high power density, good safety performance, while being capable of performing fast charging and discharging with long cycle life, no pollution and no memory effect, etc. In order to reduce users' anxiety in saving battery life and increase the energy density of lithium-ion power batteries, existing technology often adopts high-nickel ternary materials (nickel content in NCM ternary materials is greater than or equal to 0.7) as the positive electrode active material. However, with the increase of nickel content, the cycle performance of the battery will be significantly reduced. In addition, the side reactions and lithium precipitation reactions during the cycle will also cause the negative electrode sheet to expand and rebound in thickness, which will intensify the side reactions during the cycle of the lithium-ion battery and reduce the cycle life. Therefore, it is an urgent issue in the field of lithium-ion battery technology to find out how to improve the cycle performance of lithium-ion batteries with high nickel content.

SUMMARY

In order to solve the above-mentioned defects in the related art, the purpose of the present disclosure is to provide a lithium-ion battery to improve the cycle life of lithium-ion battery by reasonably controlling the micro-stress of the active material layer of positive electrode sheet and negative electrode sheet.
The technical solution provided according to the purpose of the present disclosure is as follows:
A lithium-ion battery includes: a positive electrode sheet, the positive electrode sheet includes a positive electrode current collector and a positive electrode active material layer arranged on opposite surfaces of the positive electrode current collector, the positive electrode active material layer includes a positive electrode active material $LiNi_xCo_yMn_{(1-x-y)}O_2$, in which $0.7 \leq x < 1, 0 < y \leq 0.3, 0 < x+y < 1$; a negative electrode sheet, the negative electrode sheet includes a negative electrode current collector and a negative electrode active material layer arranged on opposite surfaces of the negative electrode current collector; a micro-stress $\sigma_{positive}$ of the positive electrode active material layer and the micro-stress $\sigma_{negative}$ of the negative electrode active material layer satisfy $0.115$ Pa $\leq (\sigma_{positive} + \sigma_{negative}) / (\sigma_{positive} / \sigma_{negative}) \leq 0.165$ Pa, in which $\sigma_{positive} = E_{positive} * \beta_{positive} / 4\tan\theta_{positive}$, $E_{positive}$ is the Young's modulus of the positive electrode active material layer, $\beta_{positive}$ is the half-peak width of the (003) diffraction peak on the XRD spectrum of the positive electrode sheet, and $\theta_{positive}$ is a diffraction angle of the (003) diffraction peak on the XRD spectrum of the positive electrode sheet; $\sigma_{negative} = E_{negative} * \beta_{negative} / 4\tan\theta_{negative}$, $E_{negative}$ is the Young's modulus of the negative electrode active material layer, $\beta_{negative}$ is the half-peak width of the (002) diffraction peak on the XRD spectrum of the negative electrode sheet, and $\theta_{negative}$ is the diffraction angle of the (002) diffraction peak on the XRD spectrum of the negative electrode sheet.
The present disclosure controls the micro-stress of the positive electrode active material layer and the negative electrode active material layer, so that the positive electrode active material layer and the negative electrode active material layer may maintain a stable structure during the charging and discharging cycle of the lithium-ion battery, thereby reducing the occurrence of side reactions and further improving cycle life of lithium-ion batteries.

DESCRIPTION OF THE EMBODIMENTS

In order to enable those skilled in the art to better understand the solutions of the present disclosure, the technical solutions in the embodiments of the present disclosure will be clearly and thoroughly described below. Clearly, the described embodiments are only a part of the embodiments of the present disclosure, not all of the embodiments.
The disclosure provides a lithium-ion battery, which includes: a positive electrode sheet, the positive electrode sheet includes a positive electrode current collector and a positive electrode active material layer arranged on opposite surfaces of the positive electrode current collector, the positive electrode active material layer includes a positive electrode active material $LiNi_xCo_yMn_{(1-x-y)}O_2$, in which $0.7 \leq x < 1, 0 < y \leq 0.3, 0 < x+y < 1$; a negative electrode sheet, the negative electrode sheet includes a negative electrode current collector and a negative electrode active material layer arranged on opposite surfaces of the negative electrode current collector; a micro-stress $\sigma_{positive}$ of the positive electrode active material layer and the micro-stress $\sigma_{negative}$ of the negative electrode active material layer satisfy $0.115$ Pa $\leq (\sigma_{positive}$

+ $\sigma_{negative}$) / ($\sigma_{positive}$ / $\sigma_{negative}$) $\leq$ 0.165 Pa; in which $\sigma_{positive}$ = $E_{positive}$*$\beta_{positive}$ /4tan$\theta_{positive}$, $E_{positive}$ is the Young's modulus of the positive electrode active material layer, $\beta_{positive}$ is the half-peak width of the (003) diffraction peak on the XRD spectrum of the positive electrode sheet, and $\theta_{positive}$ is a diffraction angle of the (003) diffraction peak on the XRD spectrum of the positive electrode sheet; $\sigma_{negative}$ = $E_{negative}$*$\beta_{negative}$ /4tan$\theta_{negative}$, $E_{negative}$ is the Young's modulus of the negative electrode active material layer, $\beta_{negative}$ is the half-peak width of the (002) diffraction peak on the XRD spectrum of the negative electrode sheet, and $\theta_{negative}$ is the diffraction angle of the (002) diffraction peak on the XRD spectrum of the negative electrode sheet.

In the research on the cycle performance of lithium-ion batteries, it is found that the micro-stress of the active material layer of electrode sheet plays a very critical role. Specifically, micro-stress mainly affects the cycle life of lithium-ion batteries by affecting the crystal structure of positive electrode active material and negative electrode active material.

When the micro-stress is too large, during cycling process of the lithium-ion battery, the positive electrode active material will undergo dramatic lattice expansion and/or contraction with the deintercalation of lithium ions, especially when the nickel content is X$\geq$0.7 in the material of LiNi$_x$Co$_y$Mn$_{(1-x-y)}$O$_2$. The ternary material has a high gram capacity and a large amount of delithiation. The high nickel content leads to an increased level of nickel-lithium mixing, and the material is more likely to undergo an irreversible phase transition from H2 phase to H3 phase during the electrochemical cycle, which makes it more possible to cause structural degradation of active materials and formation of microcracks. The degree of volume anisotropy changes considerably, and the structural change of the active material leads to greater micro-stress of the crisis active coating, which obviously falls off during the charge-discharge cycle, resulting in a decrease in battery cycle performance. In the meantime, the side reaction and lithium precipitation reaction during the cycle will also cause the negative electrode sheet to expand and rebound in thickness. As the stress continues to accumulate during the cycle, the structure of the positive electrode active material and negative electrode active material will be destroyed and defects such as mechanical cracks will be dramatic. In extreme cases, the crystal structure of the positive electrode active material and negative electrode active material will be destroyed, and the structural stability of the positive electrode active material and negative electrode active material will be reduced, which in turn will intensify the side reactions during the lithium-ion battery cycle and reduce the cycle life.

When the micros-stress is too small, the internal structure of the positive electrode active material and negative electrode active material is not dense enough. During the cycle of lithium-ion batteries, the positive electrode sheet and negative electrode sheet will expand excessively, resulting in rapid accumulation of stress, which will in turn affect the cycle life.

In addition, if the micro-stress of the active material layer of the positive electrode sheet is greater than that of the negative electrode sheet to a certain extent, the positive electrode sheet will over-press the negative electrode sheet, which will prevent part of the positive electrode sheet and negative electrode sheet from being infiltrated by the electrolyte and then polarization will occur, which will cause intensified side reaction on the interface and reduce cycle life.

Therefore, it is very important to reasonably control the micro-stress of the active material layer of the positive electrode sheet and negative electrode sheet.

The present disclosure controls the micro-stress of the positive electrode active material layer and the negative electrode active material layer, so that the positive electrode active material layer and the negative electrode active material layer are able to maintain a stable structure during the charging and discharging cycle of the lithium-ion battery, thereby reducing the occurrence of side reactions and further improving cycle life of lithium-ion batteries.

In some further embodiments of the present disclosure, the micro-stress $\sigma_{positive}$ of the positive electrode active material layer and the micro-stress ($\sigma_{negative}$ of the negative electrode active material layer are preferably 0.120 Pa $\leq$ ($\sigma_{positive}$ + $\sigma_{negative}$) / ($\sigma_{positive}$ / $\sigma_{negative}$) $\leq$ 0.145 Pa. The micro-stress is tested with reference to the method given in the examples.

In some embodiments of the present disclosure, the micro-stress $\sigma_{positive}$ of the positive electrode active material layer may be 0.085 Pa -0.145 Pa, and the loose structure as well as internal pore distribution of the ternary precursor may be improved by controlling the process conditions such as ammonia concentration, reaction temperature, pH value, etc., so as to obtain a positive electrode active material with an appropriate range of micro-stress. The micro-stress of the positive electrode active material layer is adjusted by adjusting the micro-stress of the positive electrode active material.

In some embodiments of the present disclosure, the micro-stress $\sigma_{negative}$ of the negative electrode active material layer may be 0.07 Pa-0.088 Pa, and crystal structure and spatial arrangement of the negative electrode active material may be controlled by adjusting the ratio of the single particle material to the secondary particle material, as well as the particle size D50, etc., so as to obtain the negative electrode active material with an appropriate range of micro-stress. The micro-stress of the negative electrode active material layer is controlled by controlling the micro-stress of the negative electrode active material.

In some embodiments of the present disclosure, the double-sided areal density of the positive electrode sheet is further controlled to be 300-330 g/m$^2$ in the preparation process of the positive electrode sheet to increase the energy density of the battery, and the compacted density of the positive electrode sheet is controlled to be 3.4-3.65 g/cm$^3$ in

order to improve the compactness of the positive electrode active material, and then increase the micro-stress of the positive electrode active material layer, so that the structure of the positive electrode active material is more stable. Preferably, the double-sided areal density of the positive electrode sheet is in the range of 312-320 $g/m^2$, and the compacted density is in the range of 3.45-3.55 $g/cm^3$.

In some embodiments of the present disclosure, by further controlling the double-sided areal density of the negative electrode sheet to be 160-230 $g/m^2$ to increase the energy density of the battery, and controlling the compacted density of the negative electrode sheet to be 1.5-1.72 $g/cm^3$ to improve the compactness of the negative electrode active material, it is possible to increase the micro-stress of the negative electrode active material layer, and increase the structural stability of the negative electrode active material. Preferably, double-sided areal density of the negative electrode sheet is in the range of 180-220 $g/m^2$, and the compacted density is in the range of 1.63-1.68 $g/cm^3$.

In this way, both the positive electrode active material and negative active material have high structural stability. During the lithium-ion battery cycle, the structure of the positive electrode active material and negative active material is not easily damaged, thereby reducing the occurrence of side reactions and improving the cycle performance of the lithium-ion battery.

A lithium-ion battery provided by the present disclosure includes a positive electrode sheet and a negative electrode sheet. The positive electrode sheet includes a positive electrode current collector and a positive active material layer arranged on opposite surfaces of the positive electrode current collector. The negative electrode sheet includes a negative electrode current collector and a negative active material layer arranged on opposite surfaces of the negative electrode current collector.

[Positive electrode sheet]

(1) Positive electrode current collector

The present disclosure provides no specific limitation to the positive electrode current collector as long as the positive electrode current collector has electrical conductivity without causing adverse chemical changes in the battery, and the positive electrode current collector may be selected from, for example, stainless steel, aluminum, nickel, titanium, fired carbon; or surface-treated aluminum or stainless steel through use of one of carbon, nickel, titanium, silver, etc.

(2) Positive electrode active material layer

The positive electrode active material layer includes a positive electrode active material $LiNi_xCo_yMn_{(1-x-y)}O_2$, in which $0.7{\leq}x<1$, $0<y{\leq}0.3$, $0<x+y<1$. In some embodiments of the present disclosure, the lithium source includes at least one of lithium hydroxide, lithium carbonate, lithium acetate or lithium nitrate; and/or, the nickel source includes at least one of nickel sulfate, nickel acetate or nickel nitrate; and/or, the cobalt source includes at least one of cobalt sulfate, cobalt acetate or cobalt nitrate; and/or, the manganese source includes at least one of manganese sulfate, manganese acetate or manganese nitrate.

In addition, a coating process may also be carried out on the positive electrode active material. Specifically, a coating material is coated on the surface of the positive electrode active material by dry coating (high-temperature solid phase method), and the surface of the positive electrode active material is partially or completely covered with a coating layer formed by a coating material. The coating element source includes at least one of aluminum nitrate, titanium nitrate, cobalt nitrate, tungsten nitrate, yttrium nitrate, silicon oxide, boron oxide, phosphorus pentoxide or aluminum oxide.

In addition to the positive electrode active material, the positive electrode active material layer may further contain a conductive agent and a binder.

(3) Conductive agent

The conductive agent is provided to supply conductivity in the electrode. Any conductive agent may be adopted without particular limitation as long as the conductive agent has suitable electronic conductivity without causing adverse chemical changes in the battery. Preferably, the conductive agent may be selected from carbon fibers such as carbon nanofibers, carbon black such as acetylene black and Ketjen black, activated carbon, graphite, mesoporous carbon, fullerenes, and carbon materials such as carbon nanotubes.

(4) Cathode binder

The binder improves the adhesion between the positive electrode active material particles and the adhesion between the positive electrode active material and the current collector. Therefore, the binder suitable for use in the embodiment is a fluorine-containing polyolefin binder, which may include but not limited to polyvinylidene fluoride (PVDF), vinylidene fluoride copolymer or their modified derivatives (for example, modified by carboxylic acid, acrylic acid, acrylonitrile, etc.) and the like.

1) Preparation of positive electrode active material

Nickel sulfate, cobalt sulfate, manganese sulfate and lithium carbonate were weighed according to the molar ratio of lithium, nickel, cobalt and manganese in $LiNi_xCo_yMn_{(1-x-y)}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.3-0.5mol/L, pH was controlled to be 10-12.5, and temperature was controlled to be 40-50°C. After the reaction was completed, aging, filtering, washing, drying, sieving, and demagnetizing were performed to obtain a ternary precursor. Then $LiNi_xCo_yMn_{(1-x-y)}O_2$ may be obtained by mixing the formulated amount of ternary precursor with lithium carbonate and performing solid-state sintering.

2) Preparation of positive electrode sheet

The prepared positive electrode active material, conductive agent, and binder were pulped, and the solid content of the slurry was controlled to be 60-75% to obtain positive electrode slurry. The positive electrode slurry was evenly coated on the positive electrode current collector and dried, and then rolled to obtain the positive electrode sheet.

[Negative electrode sheet]

(1) Negative electrode current collector

The present disclosure provides no specific limitation to the negative electrode current collector, as long as the negative electrode current collector has high conductivity and does not cause adverse chemical changes in the battery. The negative electrode current collector may be various materials suitable for use as the negative electrode current collector of electrochemical energy storage devices in the field, for example, may include but not limited to metal foil, and more specifically may include but not limited to copper foil.

(2) Negative electrode active material layer

The negative electrode active material layer includes a negative electrode active material. The negative electrode active material may be various negative electrode active materials suitable for electrochemical energy storage devices in the art, for example, carbon materials are preferably selected, and the carbon materials are preferably graphite. In some embodiments of the present disclosure, the negative electrode active material may be a mixture of graphite single particles and graphite secondary particles, and the mixing ratio may be (55-70):(30-45).
The negative electrode active material layer further optionally includes a binder and a conductive agent in addition to the negative electrode active material.
The binder serves to bond the negative electrode active material particles to each other, and to bond the negative electrode active material layer to the metal foil. The binder may be a polymer material such as polyacrylic acid (PAA), styrene-butadiene rubber (SBR), and the like.
The conductive agent may be preferably selected from carbon fibers such as carbon nanofibers, carbon blacks such as acetylene black and Ketjen black, activated carbons, mesoporous carbons, fullerenes, and carbon materials such as carbon nanotubes.
The negative electrode active material layer may further optionally include a thickener, and the thickener may include sodium carboxymethylcellulose.

1) Preparation of negative electrode active material

Preparation of graphite single particle material: Petroleum coke raw material was crushed and coarsely crushed, finely crushed and classified, then graphitized and sieved to obtain graphite single particle.
Preparation of graphite secondary particle material: Petroleum coke raw material was coarsely crushed, finely crushed and classified, mixed with asphalt, then carbonized and graphitized, and then sieved to obtain graphite secondary particles.
The graphite single particles and graphite secondary particles were mixed according to the mass ratio (55-70):(30-45) to obtain the negative electrode active material.

2) Preparation of negative electrode sheet

The formulated amount of negative electrode active material, conductive agent, thickener and binder were mixed and added with deionized water, after stirring, the negative electrode slurry was obtained. The negative electrode slurry was evenly applied on the negative electrode current collector copper foil and rolled to obtain the negative electrode sheet.

In some embodiments of the present disclosure, the particle size D50 of the graphite material in the negative electrode sheet is preferably 7.0-15.0$\mu$m. The particle size D50 was tested using a laser particle size analyzer.

[Lithium-ion battery]

The positive electrode sheet, the separator, and the negative electrode sheet were stacked in sequence, put into a housing, and then subjected to processes such as liquid injection, packaging, standing, chemical formation, and constant volume to obtain a lithium-ion battery.

The separator may be various materials suitable for the separator of electrochemical energy storage devices in the field, for example, may include but not limited to one of polyethylene, polypropylene, polyvinylidene fluoride, aramid, polyethylene terephthalate, polytetrafluoroethylene, polyacrylonitrile, polyimide, polyamide, polyester and natural fibers or a combination of the above, and ceramic separator with a heat-resistant resin layer may also be adopted.

The electrolyte may be various electrolyte solutions suitable for electrochemical energy storage devices in this field. For example, the electrolyte typically includes an electrolyte and a solvent, and the electrolyte may normally include a lithium salt. More specifically, the lithium salt may be an inorganic lithium salt and/or organolithium salt. The solvent of the electrolyte is generally a non-aqueous solvent, preferably an organic solvent, specifically including but not limited to one of ethylene carbonate, propylene carbonate, butene carbonate, pentene carbonate, dimethyl carbonate, diethyl carbonate, dipropyl carbonate, ethyl methyl carbonate or their halogenated derivatives or a combination of the above.

Example 1

1) Preparation of positive electrode active material

Nickel sulfate, cobalt sulfate, manganese sulfate and lithium carbonate were weighed according to the molar ratio of lithium, nickel, cobalt and manganese in $LiNi_{0.7}Co_{0.1}Mn_{0.2}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.4mol/L, pH was controlled to be 12.5, and temperature was controlled to be 45°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.06, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.7}Co_{0.1}Mn_{02}O_2$.

2) Preparation of positive electrode sheet

The $LiNi_{0.7}Co_{0.1}Mn_{0.2}O_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of 328g/m$^2$ and compacted density of 3.6g/cm$^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

a. Petroleum coke raw material was mechanically crushed and classified for fine crushing;
b. The pulverized material and asphalt were completely mixed in the mixer for 30 minutes at a mass ratio of 100:5;
c. The mixture was carbonized at 700°C for 10 hours in a reactor under nitrogen protection;
d. Then the mixture was graphitized at 3000°C for 30 hours in a reactor under nitrogen protection, and sieved to obtain artificial graphite secondary particles.

The graphite single particles and graphite secondary particles were mixed at a mass ratio of 60:40 to obtain a graphite material with a particle size D50 of 14.6$\mu$m.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of 230g/m$^2$ and a compacted density of 1.72g/cm$^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Example 2

1) Preparation of positive electrode active material

Nickel sulfate, cobalt sulfate, manganese sulfate and lithium carbonate were weighed according to the molar ratio of lithium, nickel, cobalt and manganese in $LiNi_{0.8}Co_{0.1}Mn_{0.1}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.5mol/L, pH was controlled to be 10, and temperature was controlled to be 40°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.05, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.8}Co_{0.1}Mn_{0.1}O_2$.

2) Preparation of positive electrode sheet

The $LiNi_{0.8}Co_{0.1}Mn_{0.1}O_2$ prepared in step 1), Super P, conductive carbon nanotubes, and binder polyvinylidene fluoride were pulped according to the mass ratio 97.5:1:0.5: 1, and the solid content of the slurry was controlled to be 70% to obtain positive electrode slurry. The positive electrode slurry was evenly coated on the aluminum foil and dried, and then rolled to obtain the positive electrode sheet with double-sided areal density of 302g/m$^2$ and compacted density of 3.4g/cm$^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

a. Petroleum coke raw material was mechanically crushed and classified for fine crushing;
b. The pulverized material and asphalt were completely mixed in the mixer for 30 minutes at a mass ratio of 100:5;
c. The mixture was carbonized at 700°C for 10 hours in a reactor under nitrogen protection;
d. Then the mixture was graphitized at 3000°C for 30 hours in a reactor under nitrogen protection, and sieved to obtain artificial graphite secondary particles.

The graphite single particles and graphite secondary particles were mixed at a mass ratio of 60:40 to obtain a graphite material with a particle size D50 of 14.6μm.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of 160g/m$^2$ and a compacted density of 1.53g/cm$^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt LiPF$_6$ was added in this organic solvent and stirred until the lithium salt LiPF$_6$ was completely dissolved. In this manner, the electrolyte with a lithium salt LiPF$_6$ having a concentration of 1mol/L was obtained.

Example 3

1) Preparation of positive electrode active material

Nickel sulfate, cobalt sulfate, manganese sulfate and lithium carbonate were weighed according to the molar ratio of lithium, nickel, cobalt and manganese in LiNi$_{0.9}$Co$_{0.05}$Mn$_{0.05}$O$_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.3mol/L, pH was controlled to be 10.5, and temperature was controlled to be 45°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1:1.05, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.9}Co_{0.05}Mn_{0.05}O_2$.

2) Preparation of positive electrode sheet

The $LiNi_{0.9}Co_{0.05}Mn_{0.05}O_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of $312g/m^2$ and compacted density of $3.45g/cm^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

a. Petroleum coke raw material was mechanically crushed and classified for fine crushing;
b. The pulverized material and asphalt were completely mixed in the mixer for 30 minutes at a mass ratio of 100:5;
c. The mixture was carbonized at 700°C for 10 hours in a reactor under nitrogen protection;
d. Then the mixture was graphitized at 3000°C for 30 hours in a reactor under nitrogen protection, and sieved to obtain artificial graphite secondary particles.

The graphite single particles and graphite secondary particles were mixed at a mass ratio of 70:30 to obtain a graphite material with a particle size D50 of 14.3$\mu$m.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of $220g/m^2$ and a compacted density of $1.68g/cm^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Example 4

1) Preparation of positive electrode active material

Nickel sulfate, cobalt sulfate, manganese sulfate and lithium carbonate were weighed according to the molar ratio of lithium, nickel, cobalt and manganese in $LiNi_{0.7}Co_{0.1}Mn_{0.2}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.4mol/L, pH was controlled to be 10.0, and temperature was controlled to be 50°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.06, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.7}Co_{0.1}Mn_{0.2}O_2$.

2) Preparation of positive electrode sheet

The $LiNi_{0.7}Co_{0.1}Mn_{0.2}O_2$ prepared in step 1), Super P, conductive carbon nanotubes, and binder polyvinylidene fluoride were pulped according to the mass ratio 97.5:1:0.5: 1, and the solid content of the slurry was controlled to be 70% to obtain positive electrode slurry. The positive electrode slurry was evenly coated on the aluminum foil and dried, and then rolled to obtain the positive electrode sheet with double-sided areal density of $320g/m^2$ and compacted density of $3.55g/cm^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

  a. Petroleum coke raw material was mechanically crushed and classified for fine crushing;
  b. The pulverized material and asphalt were completely mixed in the mixer for 30 minutes at a mass ratio of 100:5;
  c. The mixture was carbonized at 700°C for 10 hours in a reactor under nitrogen protection;
  d. Then the mixture was graphitized at 3000°C for 30 hours in a reactor under nitrogen protection, and sieved to obtain artificial graphite secondary particles.

The graphite single particles and graphite secondary particles were mixed at a mass ratio of 55:45 to obtain a graphite material with a particle size D50 of 7.8μm.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of $180g/m^2$ and a compacted density of $1.63g/cm^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Comparative example 1

1) Preparation of positive electrode active material

Nickel sulfate, cobalt sulfate, manganese sulfate and lithium carbonate were weighed according to the molar ratio of lithium, nickel, cobalt and manganese in $LiNi_{0.7}Co_{0.1}Mn_{0.2}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.8mol/L, pH was controlled to be 13, and temperature was controlled to be 60°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1:1.06, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.7}Co_{0.1}Mn_{0.2}O_2$.

2) Preparation of positive electrode sheet

The $LiNi_{0.7}Co_{0.1}Mn_{0.2}O_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of $354g/m^2$ and compacted density of $3.55g/cm^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.
Preparation of graphite secondary particle material:

    a. Petroleum coke raw material was mechanically crushed and classified for fine crushing;
    b. The pulverized material and asphalt were completely mixed in the mixer for 30 minutes at a mass ratio of 100:5;
    c. The mixture was carbonized at 700°C for 10 hours in a reactor under nitrogen protection;
    d. Then the mixture was graphitized at 3000°C for 30 hours in a reactor under nitrogen protection, and sieved to obtain artificial graphite secondary particles.

The graphite single particles and graphite secondary particles were mixed at a mass ratio of 70:30 to obtain a graphite material with a particle size D50 of 11.5μm.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of $200g/m^2$ and a compacted density of $1.65g/cm^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Comparative example 2

1) Preparation of positive electrode active material

Nickel sulfate, cobalt sulfate, manganese sulfate and lithium carbonate were weighed according to the molar ratio of lithium, nickel, cobalt and manganese in $LiNi_{0.7}Co_{0.1}Mn_{0.2}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.2mol/L, pH was controlled to be 9, and temperature was controlled to be 30°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.06, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.7}Co_{0.1}Mn_{0.2}O_2$.

2) Preparation of positive electrode sheet

The $LiNi_{0.7}Co_{0.1}Mn_{0.2}O_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of $280g/m^2$ and compacted density of $3.3g/cm^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

a. Petroleum coke raw material was mechanically crushed and classified for fine crushing;
b. The pulverized material and asphalt were completely mixed in the mixer for 30 minutes at a mass ratio of 100:5;
c. The mixture was carbonized at 700°C for 10 hours in a reactor under nitrogen protection;
d. Then the mixture was graphitized at 3000°C for 30 hours in a reactor under nitrogen protection, and sieved to obtain artificial graphite secondary particles.

The graphite single particles and graphite secondary particles were mixed at a mass ratio of 70:30 to obtain a graphite material with a particle size D50 of 12.7μm.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of 200g/m$^2$ and a compacted density of 1.55g/cm$^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt LiPF$_6$ was added in this organic solvent and stirred until the lithium salt LiPF$_6$ was completely dissolved. In this manner, the electrolyte with a lithium salt LiPF$_6$ having a concentration of 1mol/L was obtained.

Comparative example 3

1) Preparation of positive electrode active material

Nickel sulfate, cobalt sulfate, manganese sulfate and lithium carbonate were weighed according to the molar ratio of lithium, nickel, cobalt and manganese in LiNi$_{0.8}$Co$_{0.1}$Mn$_{0.1}$O$_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.3mol/L, pH was controlled to be 10.5, and temperature was controlled to be 45°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.05, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain LiNi$_{0.8}$Co$_{0.1}$Mn$_{0.1}$O$_2$.

2) Preparation of positive electrode sheet

The LiNi$_{0.8}$Co$_{0.1}$Mn$_{0.1}$O$_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of 312g/m$^2$ and compacted density

of 3.45g/cm$^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

    a. Petroleum coke raw material was mechanically crushed and classified for fine crushing;
    b. The pulverized material and asphalt were completely mixed in the mixer for 30 minutes at a mass ratio of 100:5;
    c. The mixture was carbonized at 700°C for 10 hours in a reactor under nitrogen protection;
    d. Then the mixture was graphitized at 3000°C for 30 hours in a reactor under nitrogen protection, and sieved to obtain artificial graphite secondary particles.

The graphite single particles and graphite secondary particles were mixed at a mass ratio of 50:50 to obtain a graphite material with a particle size D50 of 16.8μm.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of 240g/m$^2$ and a compacted density of 1.70g/cm$^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Comparative example 4

1) Preparation of positive electrode active material

Nickel sulfate, cobalt sulfate, manganese sulfate and lithium carbonate were weighed according to the molar ratio of lithium, nickel, cobalt and manganese in $LiNi_{0.9}Co_{0.05}Mn_{0.05}O_2$. The formulated amount of nickel sulfate, cobalt sulfate, manganese sulfate and sodium hydroxide were respectively added into the stirring tank to prepare a solution and the solution was transferred to the storage tank. Then the nickel sulfate solution, cobalt sulfate solution, manganese sulfate solution and sodium hydroxide solution in the storage tank were flowed to the reactor for heating under nitrogen protection. The concentration of complexing agent ammonia in the reactor was controlled to be 0.3mol/L, pH was controlled to be 10.5, and temperature was controlled to be 45°C. After the reaction was completed, aging, filtering, washing, drying, sieving, and demagnetizing were performed to obtain a ternary precursor. Then the ternary precursor and lithium carbonate were mixed in a high-speed mixer with a molar ratio of 1: 1.04, the mixed material was placed in a sintering furnace for sintering, and the temperature was increased at a rate of 15°C/min until the temperature in the sintering furnace reached 510°C. Then pre-sintering was performed at this temperature for 4 hours, then the temperature was increased to 800°C at a rate of 20°C/min, and sintering was performed at this temperature for 10 hours. Then the material was naturally cooled to room temperature, and the sintered product was taken out and pulverized to obtain $LiNi_{0.9}Co_{0.05}Mn_{0.05}O_2$.

2) Preparation of positive electrode sheet

The $LiNi_{0.9}Co_{0.05}Mn_{0.05}O_2$ prepared in step 1), Super P, conductive carbon nanotubes, and binder polyvinylidene fluoride were pulped according to the mass ratio 97.5:1:0.5:1, and the solid content of the slurry was controlled to be 70% to obtain positive electrode slurry. The positive electrode slurry was evenly coated on the aluminum foil and dried, and then rolled to obtain the positive electrode sheet with double-sided areal density of $312g/m^2$ and compacted density of $3.45g/cm^3$.

3) Preparation of negative electrode active material

Preparation of graphite single particle material: Petroleum coke raw material was crushed and coarsely crushed, finely crushed and classified, then graphitized under a temperature of 3000°C for 30 hours and sieved to obtain graphite single particle.

Preparation of graphite secondary particle material:

    a. Petroleum coke raw material was mechanically crushed and classified for fine crushing;
    b. The pulverized material and asphalt were completely mixed in the mixer for 30 minutes at a mass ratio of 100:5;
    c. The mixture was carbonized at 700°C for 10 hours in a reactor under nitrogen protection;
    d. Then the mixture was graphitized at 3000°C for 30 hours in a reactor under nitrogen protection, and sieved to obtain artificial graphite secondary particles.

The graphite single particles and graphite secondary particles were mixed at a mass ratio of 75:25 to obtain a graphite material with a particle size D50 of 6.3 $\mu$m.

4) Preparation of negative electrode sheet

The graphite material prepared in step 3), Super P, sodium carboxymethyl cellulose, and polyacrylic acid (PAA) were weighed according to the mass ratio of 96.1:0.8:1.5:1.6. The formulated amount of graphite material and Super P were added into a stirring tank of 5L for dry mixing and stirring to obtain dry powder. The formulated amount of sodium carboxymethylcellulose (CMC) was dissolved in deionized water, and dispersed on its own at a speed of 1800rmp for 120min to obtain a CMC glue solution with a solid content of 1.4%. The dry powder, 50% of CMC glue solution, deionized water and plasticizer were mixed, stirred and dispersed for 60 minutes, then added with the remaining 50% of CMC glue solution and deionized water, continued to stir for 60 minutes, then added with the formulated amount of PAA and stirred for 60 minutes, and finally added with an appropriate amount of deionized water to adjust the viscosity of the slurry to 3000-5000mPa.s, and the solid content of the slurry was controlled to be 50% to obtain the negative electrode slurry. The negative electrode slurry was evenly applied on the copper foil of the negative electrode current collector and rolled to obtain a negative electrode sheet with a double-sided areal density of $150g/m^2$ and a compacted density of $1.45g/cm^3$.

5) Preparation of battery

The positive electrode sheet in step 2), the ceramic separator, and the negative electrode sheet in step 4) were sequentially stacked and put into the housing, and then subjected to liquid injection, packaging, standing, chemical formation, constant volume and other processes to obtain the lithium-ion battery of this embodiment. The preparation process of electrolytic is as follows: ethylene carbonate, methyl ethyl carbonate, and diethyl carbonate were mixed by volume ratio 1:1:1 to obtain organic solvent, then fully dried lithium salt $LiPF_6$ was added in this organic solvent and stirred until the lithium salt $LiPF_6$ was completely dissolved. In this manner, the electrolyte with a lithium salt $LiPF_6$ having a concentration of 1mol/L was obtained.

Table 1 shows parameter features of positive electrode sheet and negative electrode sheet of Examples 1-4 and Comparative Examples 1-4.

Table 1

| | Preparation conditions of positive electrode active material | | | Positive electrode sheet | | Graphite material | | Negative electrode sheet | |
|---|---|---|---|---|---|---|---|---|---|
| | Concentra tion of ammonia | pH | Temperat ure for reaction | Double-sided areal density | Compacted density | Single/Seco ndary Particle Ratio | D50 | Double-sided areal density | Compa cted density |
| Example 1 | 0.4mol/L | 12.5 | 45°C | 328g/m$^2$ | 3.6g/cm$^3$ | 60:40 | 14.6μm | 230g/m$^2$ | 1.72g/c m$^3$ |
| Example 2 | 0.5mol/L | 10 | 40°C | 302g/m$^2$ | 3.4g/cm$^3$ | 60:40 | 14.6μm | 160g/m$^2$ | 1.53g/c m$^3$ |
| Example 3 | 0.3mol/L | 10.5 | 45°C | 312g/m$^2$ | 3.45g/cm$^3$ | 70:30 | 14.3μm | 220g/m$^2$ | 1.68g/c m$^3$ |
| Example 4 | 0.4mol/L | 10.0 | 50°C | 320g/m$^2$ | 3.55g/cm$^3$ | 55:45 | 7.8μm | 180g/m$^2$ | 1.63g/c m$^3$ |
| Comparat ive example 1 | 0.8mol/L | 13 | 60°C | 354g/m$^2$ | 3.55g/cm$^3$ | 70:30 | 11.5μm | 200g/m$^2$ | 1.65g/c m$^3$ |
| Comparat ive example 2 | 0.2mol/L | 9.0 | 30°C | 280g/m$^2$ | 3.3g/cm$^3$ | 70:30 | 12.7μm | 200g/m$^2$ | 1.55g/c m$^3$ |
| Comparat ive example 3 | 0.3mol/L | 10.5 | 45°C | 312g/m$^2$ | 3.45g/cm$^3$ | 50:50 | 16.8μm | 240g/m$^2$ | 1.70g/c m$^3$ |
| Comparat ive example 4 | 0.3mol/L | 10.5 | 45°C | 312g/m$^2$ | 3.45g/cm$^3$ | 75:25 | 6.3μm | 150g/m$^2$ | 1.45g/c m$^3$ |

Performance test and analysis

1. Object under test: positive electrode sheet, negative electrode sheet and lithium-ion battery prepared in Examples 1-4 and Comparative Examples 1-4.

2. Test items

1) Young's modulus test ($E_{positive}$ is the Young's modulus of the positive electrode active material layer, $E_{negative}$ is the Young's modulus of the negative electrode active material layer)

Scanning electron microscope/scanning probe microscope joint test system (SEM/SPM) are adopted to measure Young's modulus, and the measuring method is as follows:

The positive electrode active material powder and the negative electrode active material powder of Examples 1-4 and Comparative Examples 1-4 were respectively diluted with alcohol, dispersed in an ultrasonic oscillator to disperse the particles, and dropped onto the silicon substrate with a straw. The silicon substrate together with the silicon carbide substrate were put into the SEM/SPM joint testing instrument (the silicon carbide substrate serves as a hard substrate to correct the bending amount of the cantilever beam during the test, thereby obtaining the applied force). The computer controlled the SPM motion system, and after the tip of the scanning probe touched the particle, the piezoelectric ceramic served to control the stepping rate, so that the particle squeezes the tip to perform indentation experiment. During the process of indenting the particle by the needle tip, the cantilever beam of the probe was bent to deflect the laser optical path, and the corresponding pressure value was obtained through computer conversion, and the displacement was obtained according to the movement of the piezoelectric ceramic, thus obtaining the force-displacement curve. The force-displacement curve obtained from the test was analyzed, and the reduction modulus $E_1$ of the particle may be calculated by combining formula (1):

$$E_1 = \frac{3e}{4\sqrt{R}} \qquad \text{Formula（1）}$$

In the formula, e is a constant, which may be obtained by fitting the force (F)-displacement (1) curve with F=el[15] equation; R is the radius of the needle tip.

Further, the Young's modulus E of the particle was calculated by formula (2):

$$E = \frac{E_1 * E_2 * (1 - V_1^2)}{E_2 - E_1 * (1 - V_2^2)} \qquad \text{Formula（2）}$$

In the formula, $E_2$ is the Young's modulus of the needle tip, $V_1$ is the Poisson's ratio of the sample, and $V_2$ is the Poisson's ratio of the needle tip.

In this manner, the Young's modulus $E_{positive}$ of the positive electrode active material layer and the Young's modulus $E_{negative}$ of the negative electrode active material layer may be obtained.

2) Micro-stress test of active material layer

Sample processing and loading: The positive electrode sheet and negative electrode sheet prepared in the same batch in Examples 1-4 and Comparative Examples 1-4 were cut according to the size of the sample holder and fixed on the glass sample holder. Then the sample holder was inserted into the X-ray diffractometer in the sample card slot, and the door of the sample chamber was closed.

Test parameter setting: The measurement control system software was turned on to enter the main control interface. Cu-K$\alpha$ line served as the diffraction source, the working voltage was set to 40kV, the working current was set to 40mA, the scanning speed was set to 10°/min, and the scanning range was set to 10°-90°.

The test was started. When the test was completed and the X-ray in the sample chamber was turned off, the sample chamber was opened, and the sample holder was taken out and the sample was recycled.

Data processing: The image was processed through smoothing, filtering, and subtracting the background. The diffraction peak half-width $\beta$ and diffraction angle $\theta$ corresponding to the (003) and (002) crystal plane diffraction peaks were calculated respectively. Then the micro-stress of the active material layer of the electrode sheet to be tested may be calculated and obtained through the formula $\sigma=E^*\beta/4\tan\theta$.

In the formula, the (003) crystal plane diffraction peak is the diffraction peak of the positive electrode active material, and its micro-stress is $\sigma_{positive}$, and the (002) crystal plane diffraction peak is the diffraction peak of the negative electrode active material, and its micro-stress is $\sigma_{negative}$.

3) Cycle performance test

The lithium-ion batteries prepared in Examples 1-4 and Comparative Examples 1-4 were subjected to a charge-discharge cycle test in a constant temperature box at 45°C. The charge-discharge process was: 1C CC to 4.35V, CV to 0.05C, rest 10 min, 1C DC to 2.75V, rest 10 min; when the capacity decayed to 90% of the initial capacity, the number of cycles was recorded.

3. Test results: see Table 2.

Table 2

| | $\sigma_{positive}$ (Pa) | $\sigma_{negative}$ (Pa) | $(\sigma_{positive}+\sigma_{negative})/(\sigma_{positive}/\sigma_{negative})$ (Pa) | Cycle performance |
|---|---|---|---|---|
| Example 1 | 0.145 | 0.080 | 0.124 | 1520 cls |
| Example 2 | 0.085 | 0.075 | 0.141 | 1600 cls |
| Example 3 | 0.103 | 0.088 | 0.163 | 1430 cls |
| Example 4 | 0.110 | 0.070 | 0.115 | 1450 cls |
| Comparative example 1 | 0.158 | 0.072 | 0.105 | 1130cls |
| Comparative example 2 | 0.070 | 0.082 | 0.178 | 1100 cls |
| Comparative example 3 | 0.103 | 0.097 | 0.188 | 1080 cls |
| Comparative example 4 | 0.103 | 0.050 | 0.074 | 1000 cls |

It can be seen from Table 2 that when $(\sigma_{positive} + \sigma_{negative})/(\sigma_{positive}/\sigma_{negative})$ is in the range of 0.115 Pa -0.165 Pa, the lithium-ion battery has better cycle performance, and the number of cycles could be 1400 laps or more or even 1600 laps when the capacity of battery decays to 90%. Further, comparing Examples 1-4 with Comparative Examples 1-4, it can be seen that when ($\sigma_{positive}$ is in the range of 0.085 Pa -0.145 Pa and $\sigma_{negative}$ is in the range of 0.07 Pa -0.088 Pa, the battery has better cycle performance. Furthermore, comparison fo the data of Examples 1-4 shows that when $(\sigma_{positive} + \sigma_{negative})/(\sigma_{positive}/\sigma_{negative})$ is in the range of 0.120 Pa -0.145 Pa, the lithium-ion battery has a better cycle performance.

The following detailed analysis is conducted in conjunction with the preparation process. When the positive electrode active material is prepared in Example 1-4, by controlling the concentration of ammonia water in the range of 0.3-0.5 mol/L, controlling the reaction temperature to be within the range of 40-50°C, and controlling the pH to be within the range of 10-12.5, it is possible to improve the structural porosity and internal pore distribution of the ternary precursor. Further, in combination with controlling the surface density of the positive electrode sheet to be within the range of 300-330 g/m$^2$ and the compacted density in the range of 3.4-3.65 g/cm$^3$ during the preparation of the positive electrode sheet, it is possible to improve the compactness of the positive electrode active material and make its structure more stable. Similarly, in the aspect of negative electrode, by controlling the ratio of single particle material and secondary particle material to 55-70:30-45, the particle size D50 in the range of 7.0-15.0$\mu$m, the surface density of the negative electrode sheet in the range of 160-230 g/m$^2$, and the compacted density in the range of 1.5-1.72 g/cm$^3$, it is possible to improve the compactness of the negative electrode graphite material and enhance the structural stability of the negative electrode material. In this manner, both the positive electrode material and negative electrode material have high structural stability. During the lithium-ion battery cycle, the structure of the positive electrode material and negative electrode material is not easily destroyed, thereby reducing the occurrence of side reactions and improving the cycle performance of the lithium-ion battery.

In Comparative Example 1, the micro-stress of the positive electrode active material layer was too large compared with the negative electrode, and the positive electrode sheet over-pressed the negative electrode sheet, which prevented part of the positive electrode sheet and negative electrode sheet from being infiltrated by the electrolyte and then polarization occurred, which caused intensified side reaction on the interface and reduced cycle life. In Comparative Example 2, the micro-stress of the positive electrode active material layer was too small, and the internal structure of the positive electrode active material was not compact enough; in Comparative Example 4, the micro-stress of the negative electrode active material layer was too small, and the internal structure of the negative electrode active material was not compact enough, and therefore the positive electrode sheet of Comparative Example 2 and the negative electrode sheet of Comparative Example 4 expanded excessively, which results in rapid accumulation of stress in the cycle of the lithium-ion battery, thus affecting the cycle life. The micro-stress of the negative electrode active material layer in Comparative Example 3 was too large, the structure of the negative electrode active material was easily destroyed and defects such as mechanical cracks appeared, and even the crystal structure of the negative electrode active material was destroyed. The stability of the negative electrode active material was reduced, which intensified the side reaction in the cycle of the lithium-ion battery and decreased cycle life.

**Claims**

1. A lithium-ion battery, comprising:

   a positive electrode sheet, wherein the positive electrode sheet comprises a positive electrode current collector and a positive electrode active material layer arranged on opposite surfaces of the positive electrode current collector, the positive electrode active material layer comprises a positive electrode active material $LiNi_x$-$Co_yMn_{(1-x-y)}O_2$, wherein $0.7 \leq x < 1, 0 < y \leq 0.3, 0 < x+y < 1$;
   a negative electrode sheet, wherein the negative electrode sheet comprises a negative electrode current collector and a negative electrode active material layer arranged on opposite surfaces of the negative electrode current collector;
   wherein a micro-stress $\sigma_{positive}$ of the positive electrode active material layer and a micro-stress $\sigma_{negative}$ of the negative electrode active material layer satisfy $0.115 \text{ Pa} \leq (\sigma_{positive} + \sigma_{negative}) / (\sigma_{positive} / \sigma_{negative}) \leq 0.165 \text{ Pa}$;
   wherein $\sigma_{positive} = E_{positive} * \beta_{positive} / 4\tan\theta_{positive}$, $E_{positive}$ is a Young's modulus of the positive electrode active material layer, $\beta_{positive}$ is a half-peak width of a (003) diffraction peak on an XRD spectrum of the positive electrode sheet, and $\theta_{positive}$ is a diffraction angle of the (003) diffraction peak on the XRD spectrum of the positive electrode sheet;
   wherein $\sigma_{negative} = E_{negative} * \beta_{negative} / 4\tan\theta_{negative}$, $E_{negative}$ is a Young's modulus of the negative electrode active material layer, $\beta_{negative}$ is a half-peak width of a (002) diffraction peak on an XRD spectrum of the negative electrode sheet, and $\theta_{negative}$ is a diffraction angle of the (002) diffraction peak on the XRD spectrum of the negative electrode sheet.

2. The lithium-ion battery according to claim 1, wherein the micro-stress $\sigma_{positive}$ of the positive electrode active material layer and the micro-stress $\sigma_{negative}$ of the negative electrode active material layer satisfy $0.120 \text{ Pa} \leq (\sigma_{positive} + \sigma_{negative}) / (\sigma_{positive} / \sigma_{negative}) \leq 0.145 \text{ Pa}$.

3. The lithium-ion battery according to claim 1, wherein the micro-stress $\sigma_{positive}$ of the positive electrode active material layer is 0.085 Pa -0.145 Pa.

4. The lithium-ion battery according to claim 1, wherein the micro-stress $\sigma_{negative}$ of the negative electrode active material layer is 0.07 Pa-0.088 Pa.

5. The lithium-ion battery according to claim 1, wherein a double-sided areal density of the positive electrode sheet is 300-330 g/m², and a compacted density of the positive electrode sheet is 3.4-3.65 g/cm³.

6. The lithium-ion battery according to claim 5, wherein the double-sided areal density of the positive electrode sheet is 312-320 g/m², and the compacted density of the positive electrode sheet is 3.45-3.55 g/cm³.

7. The lithium-ion battery according to claim 1, wherein a double-sided areal density of the negative electrode sheet is 160-230 g/m², and a compacted density of the negative electrode sheet is 1.5-1.72 g/cm³.

8. The lithium-ion battery according to claim 7, wherein the double-sided areal density of the negative electrode sheet is 180-220 g/m$^2$, and the compacted density of the negative electrode sheet is 1.63-1.68 g/cm$^3$.

9. The lithium-ion battery according to claim 1, wherein the negative electrode active material layer comprises a graphite material, and a particle size D50 of the graphite material is 7.0-15.0$\mu$m.

10. The lithium-ion battery according to claim 9, wherein the graphite material comprises a single particle material and a secondary particle material, and a mass ratio of the single particle material to the secondary particle material is (55-70):(30-45).

Europäisches
Patentamt

European
Patent Office

Office européen
des brevets

# EUROPEAN SEARCH REPORT

Application Number

**EP 23 16 9458**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/336844 A1 (KANG MENG [CN] ET AL) 20 October 2022 (2022-10-20) * example 8 * ----- | 1-10 | INV. H01M4/131 H01M4/525 H01M4/587 H01M10/0525 |
| A | CN 111 048 737 A (BTR NEW MAT GROUP CO LTD) 21 April 2020 (2020-04-21) * pages 12-14 * ----- | 1-10 | |

TECHNICAL FIELDS
SEARCHED (IPC)

H01M

The present search report has been drawn up for all claims

| Place of search | Date of completion of the search | Examiner |
|---|---|---|
| Munich | 25 January 2024 | Meini, Stefano |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

## ANNEX TO THE EUROPEAN SEARCH REPORT
## ON EUROPEAN PATENT APPLICATION NO.

EP 23 16 9458

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2024

| Patent document cited in search report | Publication date | Patent family member(s) | Publication date |
|---|---|---|---|
| US 2022336844 A1 | 20-10-2022 | CN 115004418 A | 02-09-2022 |
| | | EP 4167324 A1 | 19-04-2023 |
| | | JP 7355942 B2 | 03-10-2023 |
| | | JP 2023511046 A | 16-03-2023 |
| | | KR 20220116216 A | 22-08-2022 |
| | | US 2022336844 A1 | 20-10-2022 |
| | | WO 2022021273 A1 | 03-02-2022 |
| CN 111048737 A | 21-04-2020 | NONE | |

EPO FORM P0459

For more details about this annex : see Official Journal of the European Patent Office, No. 12/82